# EUROPEAN PATENT APPLICATION

(11) **EP 3 435 310 A1**
(43) Date of publication of application: **30.01.2019**
(21) Application number: 17183399.9
(22) Date of filing: 26.07.2017
(51) Int. Cl.: G06Q 20/34, G06Q 20/38, G06Q 20/02

(54) **SYSTEM AND METHOD OF A DECENTRALIZED PAYMENT NETWORK**

(71) Applicant: Financial Transactions Control Systems Sweden AB (publ), 111 43 Stockholm (SE)
(72) Inventor: Ahrsjö, Erik, SE-111 43 Stockholm (SE)
(74) Representative: Brann AB

(57) **Abstract**

A distributed system (100) for a decentralized payment network on the Internet, wherein the system (100) comprises a voucher generating system (110) configured to generate and manipulate digital asset including one or more of: digital content, voucher card, value card, or gift card, wherein the voucher generating system (110) comprises a functional module (115) comprising at least buyer data (120), payment data (130) and delivery data (140), wherein the distributed system (100) further comprises a data collection layer (150), an API layer (160) for communication with a distributed double entry ledger, block chain, (170) configured to record all the transactions ever performed by the system (100) in time series sequential order, wherein the system (100) is configured to inject payment and delivery payload data onto the block chain (170). By injecting key data from the customer order and delivery address of the asset into an immutable block chain this provides a solution to prove erroneous voucher chargebacks.

## Description

### Technical field of the invention

The invention is applicable in a decentralized payment network using so-called "distributed ledger technology".

### Background

Erroneous so-called "voucher chargebacks", is the practice of customers illegitimately disputing a sale and/or delivery of a "voucher product" such as: digital content, voucher, value or gift card products on the Internet. Sometimes, if not often, it is difficult for a vendor of such voucher products including any participating to prove without question that the sale was completed such as proving that a product was in fact delivered or the voucher or gift card product was delivered as requested. This of course is a problem for vendors of such digital content products on the Internet.

During recent years, in decentralized payment systems, a distributed ledger technology typically, simply and generically referred to as "block chain" has been invented. Herein, this context, the term "block chain" includes all kinds of technology related to block chain.

A block chain in this context can be described as a distributed data store that maintains a continuously growing list of data records called "blocks". Each block typically contains a time stamp and a link to a previous block. Some advantages of the block chain, in particular its architecture, include the following: 1) The ability of a large number of computing nodes to converge on a single consensus of a large data set, even when the nodes are run autonomously and cannot, in general, be "trusted". Every such node has a complete or partial copy of the block chain. This avoids the need to have a centralized database, making it less vulnerable to natural disasters and malicious attacks.

Block chain technology also scale extremely well through the distribution of the block chain through a highly distributed peer-to-peer network of the nodes that maintain the block chain.

To use block chain technology in a decentralized payment system is well-known per se. Block chain in this context also includes a critical system invented as part of a crypto-currency such as "Bitcoin" that prevents double spending on a decentralized payment network.

### Summary of the invention

According to one aspect of this disclosure, there is provided a (distributed) sub-system of a decentralized payment network. The sub-system comprises a voucher generating system configured to generate and manipulate digital content including one or more of: digital content, voucher, value card, or gift card.

According to another aspect of this disclosure, there is provided a method for a sub-system of a decentralized payment network, wherein the sub-system comprises a voucher generating system configured to generate and manipulate vouchers including one or more of: digital content, voucher, value card, or gift card.

By injecting key data from the customer order and delivery address of the asset into an immutable block chain, it will be possible to prove without question that the sale was completed as requested.
If this is indeed the case, then erroneous chargebacks will reduce to a negligible amount, saving money for digital content, gift card and voucher providers in baseless disputes.

An object of the system and method, respectively, is to provide a solution to prove erroneous voucher chargebacks.

The term "manipulate vouchers" in this context means to also manipulate related features typically manipulating the block chain by injecting key data from the customer order and delivery address of the asset into an immutable block chain.

According to one embodiment of the present invention, there is provided a distributed system for a decentralized payment network on the Internet. The system comprises a voucher generating system configured to generate and manipulate digital content including one or more of: digital content, voucher card, value card, or gift card. The voucher generating system comprises a functional module comprising at least buyer data, payment data and delivery data. The distributed system further comprises a data collection layer, an API layer for communication with a distributed double entry ledger, block chain, configured to record all the transactions ever performed by the distributed system in time series sequential order. The system is configured to inject payment and delivery payload data onto the block chain.

According to one embodiment of the present invention, there is provided a method of a distributed system for a decentralized payment network on the Internet, wherein the system comprises a voucher generating system configured to generate and manipulate digital content including one or more of: digital content, voucher card, value card, or gift card, wherein the voucher generating system comprises a functional module comprising at least the steps of providing buyer data, providing payment data and providing delivery data. The distributed system further comprises a data collection layer, an API layer for communication with a distributed double entry ledger, block chain, configured to record all the transactions ever performed by the system in time series sequential order, the distributing system injecting payment and delivery payload data onto the block chain.

By means of the invention according to various aspects and embodiments, it is possible to prove a delivery of digital content such as a voucher in that the delivery of the voucher having a particular serial number can be proved.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### Brief description of drawings

Aspects of the disclosure can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views, and in which:
FIG. 1 illustrates a schematic layout of a distributed system according to one embodiment of the invention; and
FIG. 2 illustrates a flow-chart of a method according to one embodiment of the invention, which method can be implemented in the distributed system illustrated in FIG. 1.

### Detailed description of embodiments of the invention

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

One problem solved by the various embodiments of the invention is the problem with erroneous voucher chargebacks.

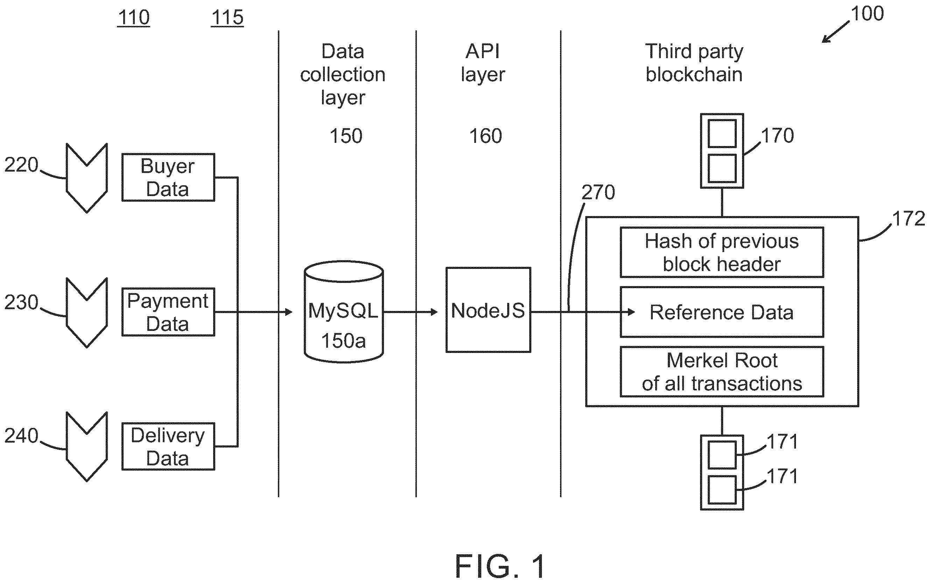

FIG. 1 illustrates a schematic layout of a distributed system 100, for instance a payment system, according to one embodiment of the invention. The system 100 comprises a voucher generating system 110 comprises and is configured to generate, and possibly manipulate, at least buyer data 120, 220; payment data 130, 230; and delivery data 140, 240. The generation and manipulation of the data 120, 130, 140 per se can be implemented by one or more processors capable of running specialized computer instructions and/or computer programs. The computer programs are typically stored on one or more stores such as computer memories. This is not explained or illustrated in more detail, since it is well-known to the person skilled in the art. Hence, only a schematic "voucher generating system" 110 is illustrated in FIG. 1. The payment system 100 further comprise a data collection layer 150 that is arranged to communicate with the voucher system 110, typically by receiving (indicated by an arrow), buyer data, payment data and delivery data. The data collection layer 150 can be implemented by a data base 150a and implemented and/or manipulated using a data base tool such as "MySQL". The data collection layer 150 is arranged to communicate via an API layer 160, for instance implemented by NodeJS, with a block chain 170. The block chain 170 is typically an immutable third party block chain as explicitly illustrated in FIG. 1 by the wording "third party block chain". The distributed double entry ledger, i. e. the block chain, 170 is configured to record all the transactions ever performed by the system 100 in time series sequential order. The block chain 170 contains records 171, 171 in pair of transactions in blocks.

The above disclosed modules and layers will not be further described in more detail, since they and their implementation are well known to the skilled person. The communication is schematically illustrated by arrows in FIG. 1. Any HTTP server required for executing for instance incoming requests from a customer, or any server for voucher generating system 110 are not illustrated in detail, but only schematically, since this is obvious to the skilled person. The distributed system 100 may also comprise crypto modules for generating public and private key pairs as well as has functions on public key to produce customer identifier. The distributed system 100 may also comprise a customer module for registration and recording of customer. A transaction module may also be provided for generating an unspent transaction when a voucher, or gift card is purchased, or manipulated in any other way, for instance redeemed and writing it onto the block chain 170, one transaction pair 171, 171 in each block. The transaction module may also provide functions of generating an unspent transaction when a value card is purchased, manipulated, transferred or redeemed and writing it onto the block chain 170. A communication module may also be provided and configured to communicate with customers via email or sms, or the like. A gate way module may provide functionality of connecting to external services via standard network protocols. None of these are further described in this context since these are well-known to the skilled person to implement.

The API layer 160 is configured to provide standard routine services for external programs to communicate with the distributed system 100 programmatically.

The third part block chain 170 can, but without any limitation to this in particular, be based on the block chain as described in for instance US-A1-2017/0200147.

The voucher generating system 110 per se may be of known type such as the one described for instance in the published US patent application US-A1-2017/0200147. The distributed system 100 including the voucher generating system 110 is accessible but not limited to via Web browsers using HTTP/HTTPS protocol and mobile applications running on mobile operating systems like Android, IOS, and Windows or programmatically using standard APIs.

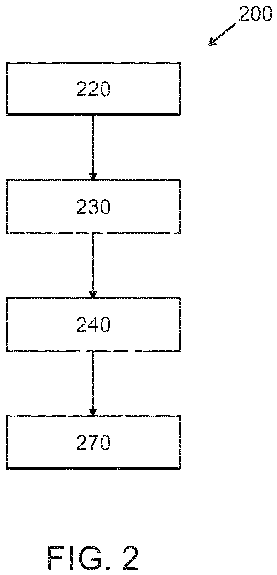

FIG. 1 also schematically illustrates enrolling a customer in the system 100 and FIG. 2 illustrates a flow-chart of a method according to one embodiment of the invention, which method can be implemented in the distributed system illustrated in FIG. 1.

FIG. 1 illustrates a flow-chart following having enrolled a customer. A customer is considered to having accessed the system 100 typically using a client interface (not illustrated). The system 100 is considered to having captured customer information including username and pass-word, having applied cryptographic method and generated public key and stored all the captured and generated data in database. The system 100, typically the voucher generating system 110 gathers user information using system memory during the registration process. The distributed system 100, typically the voucher generating system 110, runs specialized computer instructions and cryptographic algorithms and produces public and private key pairs for the user. Another computer program is typically used to create one way hash of the public key which can be used as account identifier for the customer. The generated and other collected data such as customer (buyer) data 120, payment data 130 and delivery data 140 is stored in the data base 150a.

The voucher generating system 110 comprising the functional module 115 provides at least the steps of providing 220 buyer data, providing 230 payment data and providing 240 delivery data, wherein the distributed system 100 further comprising a data collection layer 150, an API layer 160 for communication with a distributed double entry ledger, block chain, 170 recording all the transactions 171, 171 ever performed by the distributed system 100 in time series sequential order. The distributed system 100 also injects 270 payment and delivery payload data 120, 130 onto the block chain 170. By injecting key data from the customer order and delivery address of the asset into an immutable block chain this provides a solution to prove erroneous voucher chargebacks.

The value of a customer's purchased asset: voucher, digital content, value or gift card is cryptographically locked and can only be unlocked by the customer's private key upon approval. The unspent transaction is then written to the block chain 170 and upon confirmation of the transaction, the purchase of the asset is finalized in the name of the customer.

The customer may also directly purchase the asset for some other recipient, typically an identifiable person. Then the customer specifies the name, address, email address of the person the asset is meant for, and an unspent transaction is created and written to the block chain 170. This may also include verification of the customer to banks to certify the payment. However, if the recipient is not a customer, the system 100 sends communication to the recipient via email and/or sms that he/she has been gifted a value card or voucher by said person for a specific value. Typically, the system 100 will then wait for the confirmation of the transaction on the block chain and upon confirmation will generate an image of the gift card and initiate physical delivery.

The new distributed system and method have many advantages compared to prior art and achieves one or more of the following:
The ability to quickly and efficiently prove the payment and delivery of a voucher product, without question.

Comparable cost profile to current system.

Comparable scalability to current system.

Comparable uptime and general efficiency to current system.

Obtain unchallengeable evidence of payment in all regions.

Obtain unchallengeable evidence of delivery for all voucher products.

It should be emphasized that the above-described embodiments are merely examples of possible implementations. Many variations and modifications may be made to the above-described embodiments without departing from the principles of the present disclosure. All such modifications and variations are intended to be included herein within the scope of this disclosure and protected by the following claims.

## Claims

1. A distributed system (100) for a decentralized payment network on the Internet, wherein the system (100) comprises a voucher generating system (110) configured to generate and manipulate digital asset including one or more of: digital content, voucher card, value card, or gift card, wherein the voucher generating system (110) comprises a functional module (115) comprising at least buyer data (120), payment data (130) and delivery data (140), wherein the distributed system (100) further comprises a data collection layer (150), an API layer (160) for communication with a distributed double entry ledger, block chain, (170) configured to record all the transactions ever performed by the system (100) in time series sequential order, **characterized in that** the system (100) is configured to inject payment and delivery payload data onto the block chain (170).

2. The system according to claim 1, wherein the block chain (170) is a verified third party block chain.

3. The system according to claim 1 or 2, further comprising a block chain interface (172) configured to query block chain (170) records (171).

4. A method (200) of a distributed system (100) for a decentralized payment network on the Internet, wherein the system (100) comprises a voucher generating system (110) configured to generate and manipulate digital asset including one or more of: digital content, voucher card, value card, or gift card, wherein the voucher generating system (110) comprises a functional module (115) comprising at least the steps of providing (220) buyer data (120), providing (230) payment data (130) and providing (240) delivery data (140), wherein the distributed system (100) further comprises a data collection layer (150), an API layer (160) for communication with a distributed double entry ledger, block chain, (170) configured to record all the transactions ever performed by the system (100) in time series sequential order, **characterized in** the step of the distributing system (100) injecting (270) payment and delivery payload data onto the block chain (170).

5. The method according to claim 4, further comprising the step of a block chain interface (172) quering block chain (170) records (171).
